# EUROPEAN PATENT SPECIFICATION

(11) **EP 4 443 632 B1**
(45) Date of publication and mention of the grant of the patent: **10.06.2026**
(21) Application number: 23166515.9
(22) Date of filing: 04.04.2023
(51) Int. Cl.: H01M 50/463, H01M 50/474, H01M 50/609

(54) **ELECTRODE ASSEMBLY FOR A BATTERY CELL OF A VEHICLE, SEPARATOR FOR AN ELECTRODE ASSEMBLY, BATTERY CELL FOR A VEHICLE, VEHICLE, AND METHOD FOR REPLENISHING ELECTROLYTE**
ELEKTRODENANORDNUNG FÜR EINE BATTERIEZELLE EINES FAHRZEUGS, SEPARATOR FÜR EINE ELEKTRODENANORDNUNG, BATTERIEZELLE FÜR EIN FAHRZEUG, FAHRZEUG UND VERFAHREN ZUM NACHFÜLLEN VON ELEKTROLYT
ENSEMBLE D'ÉLECTRODES POUR UN ÉLÉMENT DE BATTERIE D'UN VÉHICULE, SÉPARATEUR POUR UN ENSEMBLE D'ÉLECTRODES, ÉLÉMENT DE BATTERIE POUR UN VÉHICULE, VÉHICULE ET PROCÉDÉ DE RÉAPPROVISIONNEMENT EN ÉLECTROLYTE

(43) Date of publication of application: 09.10.2024
(73) Proprietor: Volvo Car Corporation, 405 31 Göteborg (SE)
(72) Inventor: LLOYD, Ben, 40531 Göteborg (SE)
(74) Representative: Kransell & Wennborg KB

(56) References cited:
- WO-A1-2017/204137
- US-A1- 2015 162 590
- US-A1- 2016 310 748
- US-A1- 2017 133 650
- US-B2- 10 340 495

## Description

The present disclosure relates to an electrode assembly for a battery cell of a vehicle. The electrode assembly comprises a first electrode with a first electrode main body and a first connection terminal protruding from the first electrode main body. Moreover, the electrode assembly comprises a second electrode with a second electrode main body and a second connection terminal protruding from the second electrode main body.

The present disclosure is additionally directed to a separator for an electrode assembly.

Moreover, the present disclosure is directed to a battery cell for a vehicle. The battery cell comprises an electrode assembly.

Furthermore, the present disclosure is directed to a vehicle comprising a battery cell.

The present disclosure also relates to a method for replenishing electrolyte into an electrode assembly for a battery cell of a vehicle.

Battery cells comprising electrodes and one or more separators known. Additionally, an electrolyte is needed in order to operate the battery cell. Over the lifetime of a battery cell, electrolyte is consumed, i.e. the amount of electrolyte being available in the battery cell is reduced. Thus, in order to ensure a long service life of a battery cell, it has to be ensured that a sufficient amount of electrolyte is available in a space between the electrodes of the battery cell.

WO 2017/204137 A1 discloses an electricity storage element with a plurality of electrode bodies wherein adjacent electrode bodies are in liquid contact with one another at the outer peripheral surfaces thereof.

It is an objective of the present disclosure to further improve the service life of battery cells. Especially, the availability of electrolyte shall be enhanced.

The problem is at least partially solved or alleviated by the subject matter of the independent claims of the present disclosure, wherein further examples are incorporated in the dependent claims.

According to a first aspect, there is provided an electrode assembly for a battery cell of a vehicle. The electrode assembly comprises a first electrode with a first electrode main body and a first connection terminal protruding from the first electrode main body. Moreover, the electrode assembly comprises a second electrode with a second electrode main body and a second connection terminal protruding from the second electrode main body. Additionally, the electrode assembly comprises a capillary element being at least partially arranged outside a space defined between the first electrode main body and the second electrode main body. The capillary element is fluidically connected to the space defined between the first electrode main body and the second electrode main body. The capillary element is oriented downwards in an operational state of the electrode assembly. When using such an electrode assembly in a battery cell, electrolyte may accumulate in a lower portion of the battery cell due to gravity. Due to the fact that the capillary element is oriented downwards, the capillary element is configured to contact such an accumulation of electrolyte. Consequently, using capillary forces of the capillary element, electrolyte may be transferred into the space defined between the first electrode main body and the second electrode main body. Consequently, electrolyte is made available in the space defined between the first electrode main body and the second electrode main body such that the electrolyte may be used in the operation of the battery cell comprising the electrode assembly. This enhances the service life of the battery cell being equipped with such an electrode assembly.

In the context of the present disclosure, a capillary element is to be understood as a part or element comprising capillaries. In order to be able to use the capillary effect, i.e. in order to have a liquid moved along the capillary against gravity, a diameter of the capillary and fluidic characteristics of the liquid need to be adjusted to one another. Only then, the fluid is able to wet the capillary element. In this context, a pair of a liquid and a capillary element needs to be chosen such that the wettability or contact angle of the fluid allows the fluid to be drawn inside the capillaries. In the present disclosure, the fluid characteristics of an electrolyte used in a battery cell and the diameter of the capillaries of the capillary element need to match in order to produce the capillary effect.

It is noted that, depending on the configuration of the electrode assembly, the electrode assembly may be called an electrode stack or an electrode roll.

According to the disclosure, the capillary element is at least partially arranged between the first connection terminal and the second connection terminal. In this position, the capillary element does not increase the outer dimensions of the electrode assembly. Consequently, the capillary element may be provided and still the electrode assembly is compact. Moreover, the space between the first connection terminal and the second connection terminal may be a typical space where electrolyte accumulates. Thus, using the capillary element, electrolyte from such an accumulation may be transferred back into the space defined between the first electrode main body and the second electrode main body such that the electrolyte may be used in the operation of the battery cell.

Further according to the disclosure, the capillary element is tab-shaped. This is a comparatively simple shape. Consequently, the capillary element may be manufactured in a simple manner. This applies to both the alternative in which the capillary element is integrally formed with the separator and the alternative in which the capillary element and the separator are separate parts.

Alternatively, the capillary element is bar-shaped or block-shaped.

According to an example, the capillary element fulfills at least two functionalities. One of these at least two functionalities is the transfer of electrolyte into the space defined between the first electrode main body and the second electrode main body. A second functionality may relate to an electrical insulation. In this context, the capillary element is an electrical insulation element as well. Additionally or alternatively, the second functionality may relate to a mechanical support. In this context, the capillary element is a mechanical support element as well. Having at least two functionalities realized by the capillary element renders the structure of the electrode assembly and a battery cell equipped therewith simple and compact.

In another example, at least one of the first connection terminal and the second connection terminal is oriented downwards in an operational state of the electrode assembly. In such a configuration, the electrode assembly is at least partially open on a lower side such that electrolyte is able to leak out of the space defined between the first electrode main body and the second electrode main body. In other words, in such a configuration of an electrode assembly, it is typical that electrolyte leaves the space between the first electrode main body and the second electrode main body and accumulates below the electrode assembly. This phenomenon can be mitigated using the capillary element such that the service life of a battery having such an electrode assembly may be prolonged.

In an example, the electrode assembly further comprises a separator. According to a first alternative, the capillary element contacts the separator. According to a second alternative, the capillary element is integrally formed with the separator. The separator may be at least partially arranged in the space defined between the first electrode main body and the second electrode main body. Additionally or alternatively, the separator may be wrapped around at least one of the first electrode main body and the second electrode main body. Thus, in all of the above alternatives electrolyte can be brought back into the space defined between the first electrode main body and the second electrode main body with high reliability. In this context, the fact that the capillary element contacts the separator implies that the capillary element and the separator are separate parts. This has the advantage that the material and other characteristics of the separator and the capillary element may be chosen independently from one another. In a case in which the capillary element is integrally formed with the separator, the structure of the electrode assembly is particularly simple.

In an example, the capillary element is made from the same material as the separator. For example, the material comprises a polyolefin, polypropylene, polyethylene, polyvinylidene fluoride, polyaramide, and/or other polymers. In another example, the material is a polyolefin, polypropylene, polyethylene, polyvinylidene fluoride, polyaramide, and/or another polymer. Optionally, a coating may be provided thereon. The coating material may comprise aluminum oxide, aluminum oxide hydroxide, and/or ceramic particles. In another example, the coating material is aluminum oxide, aluminum oxide hydroxide, and/or ceramic particles. Using the same material renders the electrode assembly structurally simple. Moreover, this configuration offers the possibility to use materials which are known to be well-suitable for being used in a battery cell.

In an example, the capillary element is at least partially arranged between the first electrode main body and the second electrode main body. In such a configuration, the fluid connection between the space defined between the first electrode main body and the second electrode main body and the capillary element is particularly performant. Thus, electrolyte can be transferred into the space between the first electrode main body and the second electrode main body with high reliability.

In an example, the capillary element is made from a fibrous material or from a porous material. Both types of materials are able to provide capillary forces which are able to transfer electrolyte against gravity. Examples of materials are glass fiber (silicon dioxide) or other ceramic or polymer based fibrous or porous materials

According to a second aspect, there is provided a separator for an electrode assembly of the present disclosure. The separator comprises a separator main body and a capillary element protruding from the separator main body. Thus, in addition to the known functionalities of a separator, this separator has the functionality to be configured to transfer electrolyte from an accumulation of electrolyte outside a space defined between the first electrode main body and the second electrode main body into the space defined by the first electrode main body and the second electrode main body. In other words, such a separator is able to replenish electrolyte and, thus, prolong service life of an electrode assembly and a battery cell being equipped therewith.

According to a third aspect, there is provided a battery cell for a vehicle. The battery cell comprises an electrode assembly according to the present disclosure and a battery housing. The electrode assembly is arranged inside the battery housing. Due to the fact that the electrode assembly according to the present disclosure comprises a capillary element, electrolyte which has accumulated outside a space defined between the first electrode main body and the second electrode main body may be transferred back into this space using the capillary element. Consequently, even though electrolyte is consumed while using the battery cell, such a battery cell has a particularly long service life.

According to an example, the battery cell is a lithium-ion battery cell. The battery cell may be a prismatic battery cell or a round battery cell.

In an example, the first connection terminal and/or the second connection terminal are oriented downwards in an operational state of the battery cell. Also the capillary element is oriented downwards. Optionally, the capillary element is arranged between the first connection terminal and the second connection terminal. In a configuration in which the first connection terminal and/or the second connection terminal are oriented downwards, electrolyte may accumulate at the position below the space defined between the first electrode main body and the second electrode main body. Using the capillary element, the accumulated electrolyte may be transferred back into the space between the first electrode main body and the second electrode main body against gravity. This enhances the service life of the battery cell.

In an example, the capillary element contacts a lower wall of the battery housing. In this context, the lower wall of the battery housing may be formed by a cup-shaped part of the battery housing. Such a part may also be called a can. Alternatively, the lower side of the battery housing may be formed by a lid part of the battery housing. The fact that the capillary element contacts the lower wall of the battery housing ensures that the capillary element contacts comparatively small accumulations of electrolyte. Consequently, also electrolyte from comparatively small accumulations of electrolyte may be transferred back into the space defined between the first electrode main body and the second electrode main body.

In an example, the battery cell further comprises an electrolyte. The electrolyte has a contact angle of 30 degrees or less when contacting the capillary element. In this context, the contact angle is an inverse measure of wettability. Thus, a small contact angle indicates a good wettability and a large contact angle indicates a bad wettability. A contact angle of zero degrees would mean perfect wettability and a contact angle of 180 degrees would mean no wettability at all. The contact angle is the angle at which a liquid-vapor interface meets a solid-liquid interface. The contact angle may be determined if a drop of electrolyte is arranged on a surface of the capillary element. The contact angle is a result of the balance between adhesive and cohesive forces. Thus, the capillary effect may be provided in a reliable manner.

According to another example, the contact angle is 20 degrees or less. Consequently, the capillary effect is provided in a particularly reliable manner.

According to a fourth aspect, there is provided a vehicle comprising a battery cell of the present disclosure. In an operational state of the vehicle, the first connection terminal and/or the second connection terminal are oriented downwards. As has been explained before, the capillary element is configured to transfer electrolyte from an accumulation of electrolyte outside the space defined between the first electrode main body and the second electrode main body back into the space defined between the first electrode main body and the second electrode main body. This enhances the service life of the battery cell. Consequently, also the service life and the reliability of the vehicle comprising the battery cell is enhanced.

According to a fifth aspect, there is provided a method for replenishing electrolyte into an electrode assembly for a battery cell of a vehicle. The method comprises transferring electrolyte from an accumulation of electrolyte being arranged below the electrode assembly into the electrode assembly using capillary forces. This means that the capillary forces act against gravity. Thus, the electrolyte may be moved from the accumulation of electrolyte into the electrode assembly against gravity. Since this effect essentially relies on the capillary forces, no energy needs to be provided to the electrolyte assembly from an outside thereof. Furthermore, besides the capillary element, no further parts or components are needed. Thus, this method is comparatively simple and reliable.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a battery cell according to the present disclosure, wherein the battery cell comprises an electrode assembly according to the present disclosure and a separator according to the present disclosure, wherein electrolyte may be replenished into the electrode assembly of the battery cell using a method according to the present disclosure,
- Figure 2: shows a battery cell of the vehicle of Figure 1 in a separate representation,
- Figure 3: shows the electrode assembly of the battery cell of Figure 2 in a side view along direction III,
- Figure 4: shows a separator of the battery cell of Figure 2 in a separate representation, and
- Figure 5: shows a battery cell according to another example in a view corresponding to the view of Figure 2, wherein the battery cell according to the other example can be used in the vehicle of Figure 1.

The Figures are merely schematic representations and serve only to illustrate examples of the disclosure. Identical or equivalent elements are in principle provided with the same reference signs.

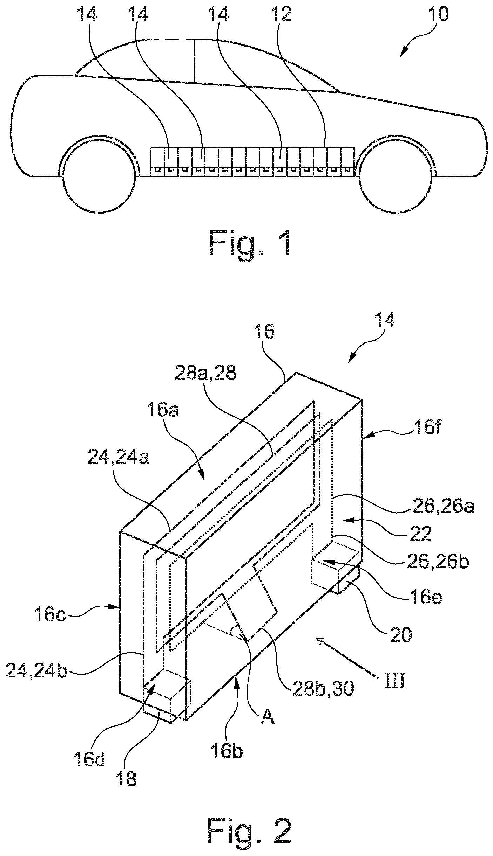

Figure 1 shows a vehicle 10 which in the present example is an electric vehicle.

The vehicle 10 comprises a battery pack 12 with a plurality of battery cells 14 which are connected in parallel and/or in series in order to provide electric power necessary for propelling the vehicle 10. For reasons of better visibility, only some of the battery cells 14 in Figure 1 are provided with reference sign.

All the battery cells 14 are essentially identical.

Figure 2 shows one of the battery cells 14 in a separate view.

The battery cell 14 comprises a housing 16 which in the present example has a prismatic geometry.

Thus, the housing comprises an upper wall 16a, a lower wall 16b, a first lateral wall 16c, a second lateral wall 16d, a third lateral wall 16e and a fourth lateral wall 16f.

On an exterior side of the lower wall 16b, there is provided a first connection terminal 18 and a second connection terminal 20. One out of the first connection terminal 18 and the second connection terminal 20 may be a positive connection terminal and the respective other one out of the first connection terminal 18 and the second connection terminal 20 may be a negative connection terminal.

Inside the housing 16, there is provided an electrode assembly 22.

The electrode assembly 22 comprises a first electrode 24 with a first electrode main body 24a and a first connection terminal 24b protruding from the first electrode main body 24a. The first connection terminal 24b of the first electrode 24 is electrically connected to the first connection terminal 18 of the battery cell 14.

In the present example, the first connection terminal 24b of the first electrode 24 is formed as a tab protruding from the first electrode main body 24a. In Figure 2, the first electrode 24 is represented with a dashed line.

The first connection terminal 24b extends downwards.

The electrode assembly 22 further comprises a second electrode 26 with a second electrode main body 26a and a second connection terminal 26b protruding from the second electrode main body 26a. The second connection terminal 26b of the second electrode 26 is electrically connected to the second connection terminal 20 of the battery cell 14.

In the present example, the second connection terminal 26b of the second electrode 26 is formed as a tab protruding from the second electrode main body 26a. In Figure 2, the second electrode is represented with a dotted line.

The second connection terminal 26b extends downwards.

The electrode assembly 22 further comprises a separator 28. Also the separator comprises a separator main body 28a.

Moreover, a capillary element 30 is formed integrally with the separator 28. More precisely, the capillary element 30 is formed as a tab 28b of the separator 28 protruding from the separator main body 28a. Thus, in the present example, the separator main body 28a and the capillary element 30 are made from the same material.

In the present example, the separator 28 is made from polypropylene.

The separator 28 is arranged between the first electrode 24 and the second electrode 26. More precisely, the separator main body 28a is arranged between the first electrode main body 24a and the second electrode main body 26a.

Consequently, the separator tab 28a forming the capillary element 30, is arranged outside a space defined between the first electrode main body 24a and the second electrode main body 26a.

The capillary element 30 extends downwards from the separator main body 28a and contacts the lower wall 16b of the housing 16. More precisely, the capillary element 30 is inclined such that it contacts the lower wall 16b of the housing 16 with an angle A of approximately 25°.

Additionally, the capillary element 30 is arranged between the first connection terminal 24b and the second connection terminal 26b.

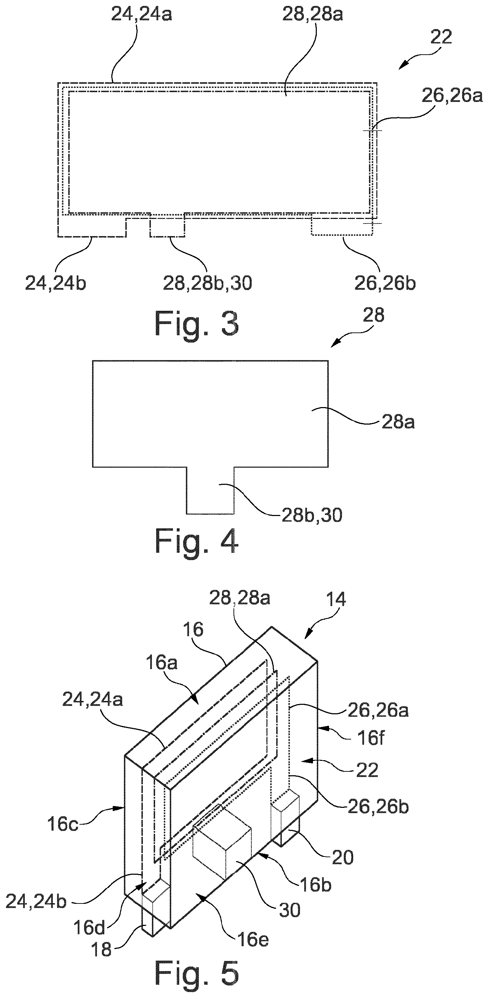

The electrode assembly 22 is also shown in Figure 3. In this Figure, the first electrode 24, the second electrode 26 and the separator 28 have been represented using the same line types as in Figure 2.

Additionally, the separator 28 is shown in Figure 4.

Due to the fact that the capillary element 30 extends from the separator main body 28a, the capillary element 30 is fluidically connected to the space defined between the first electrode main body 24a and the second electrode main body 26a. This will become clear from the following explanations.

The battery cell 14 also comprises an electrolyte filling.

As is generally known, electrolyte needs to be available in the space defined between the main body 24a of the first electrode 24 and the main body 26a of the second electrode 26.

Over the lifetime of the battery cell 14, electrolyte may be consumed and electrolyte may accumulate on the lower wall 16b of the housing 16 between the first connection terminal 24b and the second connection terminal 26b. This effect may be driven by gravity.

Since the capillary element 30 contacts the lower wall 16b at this position, the capillary element 30 also contacts such an accumulation of electrolyte.

The capillary element 30 comprises capillaries. These capillaries have a diameter which is adjusted to the fluid properties of the electrolyte. Consequently, a capillary effect is produced and, due to capillary forces, electrolyte may be transferred from the accumulation of the lower wall 16b into the space defined between the main body 24a of the first electrode 24 and the main body 26a of the second electrode 26.

Thus, the capillary element 30 provides a fluid connection between the lower wall 16b of the housing 16 and the space defined between the first main body 24a of the first electrode 24 and the second main body 26a of the second electrode 26. In other words, the capillary element 30 is fluidically connected to the space defined between the first main body 24a of the first electrode 24 and the second main body 26a of the second electrode 26.

It is noted that the capillary forces act against gravity such that the electrolyte may be moved against gravity.

Using the capillary element 30, a method for replenishing electrolyte into an electrode assembly 22 may be executed in that the electrolyte is transferred from an accumulation of electrolyte being arranged below the electrode assembly 22 into the electrode assembly 22 using capillary forces.

Figure 5 shows a battery cell 14 in accordance with another example. In the following, only the differences with respect to the example of Figures 2 to 4 will be explained.

In the example of Figure 5, the separator 28 and the capillary element 30 are formed as separate parts. Consequently, the separator 28 is essentially formed by the separator main body 28a.

The capillary element 30 is formed as a bar-shaped or block-shaped part.

Even though the capillary element 30 and the separator 28 could still be made from the same material, in the example of Figure 5 the separator 28 and the capillary element 30 are made from different materials.

Generally speaking, the capillary element 30 is made from a fibrous material or from a porous material. In the example of Figure 5, the capillary element 30 is made from a glass fiber material.

The capillary element 30 is arranged inside the battery cell 14 such that it contacts the lower wall 16b and the separator 28.

Due to the fact that the capillary element 30 comprises capillaries, the functionality as has been explained in connection with the example of Figures 2 to 4 may also be provided using the example of Figure 5.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: battery pack
- 14: battery cell
- 16: housing
- 16a: upper wall of the housing
- 16b: lower wall of the housing
- 16c: first lateral wall of the housing
- 16d: second lateral wall of the housing
- 16e: third lateral wall of the housing
- 16f: fourth lateral wall of the housing
- 18: first connection terminal
- 20: second connection terminal
- 22: electrode assembly
- 24: first electrode
- 24a: main body of the first electrode
- 24b: connection terminal of the first electrode
- 26: second electrode
- 26a: main body of the second electrode
- 26b: connection terminal of the second electrode
- 28: separator
- 28a: separator main body
- 28b: separator tab
- 30: capillary element

- A: angle

## Claims

1. An electrode assembly (22) for a battery cell (14) of a vehicle (10), the electrode assembly (22) comprising
a first electrode (24) with a first electrode main body (24a) and a first connection terminal (24b) protruding from the first electrode main body (24a),
a second electrode (26) with a second electrode main body (26a) and a second connection terminal (26b) protruding from the second electrode main body (26a), and a capillary element (30) being at least partially arranged outside a space defined between the first electrode main body (24a) and the second electrode main body (26a), wherein the capillary element (30) is fluidically connected to the space defined between the first electrode main body (24a) and the second electrode main body (26a) **characterized in that** the capillary element (30) is oriented downwards in an operational state of the electrode assembly (22),
**in that** the capillary element (30) is at least partially arranged between the first connection terminal (24b) and the second connection terminal (26b), and
**in that** the capillary element (30) is tab-shaped, bar-shaped or block-shaped.

2. The electrode assembly (22) of claim 1, wherein in an operational state of the electrode assembly (22), at least one of the first connection terminal (24b) and the second connection terminal (26b) is oriented downwards.

3. The electrode assembly (22) of any one of the preceding claims, further comprising a separator (28), wherein the capillary element (30) contacts the separator (28) or wherein the capillary element (30) is integrally formed with the separator (28).

4. The electrode assembly (22) of claim 3, wherein the capillary element (30) is made from the same material as the separator (28).

5. The electrode assembly (22) of any one of the preceding claims, wherein the capillary element (30) is at least partially arranged between the first electrode main body (24a) and the second electrode main body (26a).

6. The electrode assembly (22) of any one of the preceding claims, wherein the capillary element (30) is made from a fibrous material or from a porous material.

7. A battery cell (14) for a vehicle (10), the battery cell (14) comprising an electrode assembly (22) according to any one of claims 1 to 6, and a battery housing (16),
wherein the electrode assembly (22) is arranged inside the battery housing (16).

8. The battery cell (14) of claim 7. wherein in an operational state of the battery cell (14),
the first connection terminal (24b) and/or the second connection terminal (26b) are oriented downwards.

9. The battery cell (14) of claim 7 or 8, wherein the capillary element (30) contacts a lower wall (16b) of the battery housing (16).

10. A vehicle (10) comprising a battery cell (14) of any one of claims 7 to 9, wherein in an operational state of the vehicle (10), the first connection terminal (24b) and/or the second connection terminal (26b) are oriented downwards.

## Patentansprüche

1. Elektrodenanordnung (22) für eine Batteriezelle (14) eines Fahrzeugs (10), wobei die Elektrodenanordnung (22) umfasst
eine erste Elektrode (24) mit einem ersten Elektrodenhauptkörper (24a) und einem ersten Verbindungsanschluss (24b), der von dem ersten Elektrodenhauptkörper (24a) vorsteht,
eine zweite Elektrode (26) mit einem zweiten Elektrodenhauptkörper (26a) und einem zweiten Verbindungsanschluss (26b), der von dem zweiten Elektrodenhauptkörper (26a) vorsteht, und
ein Kapillarelement (30), das zumindest teilweise außerhalb eines Raums, der zwischen dem ersten Elektrodenhauptkörper (24a) und dem zweiten Elektrodenhauptkörper (26a) definiert ist, angeordnet ist,
wobei das Kapillarelement (30) fluidisch mit dem Raum, der zwischen dem ersten Elektrodenhauptkörper (24a) und dem zweiten Elektrodenhauptkörper (26a) definiert ist, verbunden ist,
**dadurch gekennzeichnet, dass** das Kapillarelement (30) in einem Betriebszustand der Elektrodenanordnung (22) nach unten ausgerichtet ist,
dass das Kapillarelement (30) zumindest teilweise zwischen dem ersten Verbindungsanschluss (24b) und dem zweiten Verbindungsanschluss (26b) angeordnet ist und dass das Kapillarelement (30) laschenförmig, stabförmig oder blockförmig ist.

2. Elektrodenanordnung (22) nach Anspruch 1, wobei in einem Betriebszustand der Elektrodenanordnung (22) der erste Verbindungsanschluss (24b) und/oder der zweite Verbindungsanschluss (26b) nach unten ausgerichtet sind/ist.

3. Elektrodenanordnung (22) nach einem der vorhergehenden Ansprüche, die ferner einen Separator (28) umfasst, wobei das Kapillarelement (30) den Separator (28) kontaktiert oder wobei das Kapillarelement (30) integral mit dem Separator (28) ausgebildet ist.

4. Elektrodenanordnung (22) nach Anspruch 3, wobei das Kapillarelement (30) aus dem gleichen Material wie der Separator (28) hergestellt ist.

5. Elektrodenanordnung (22) nach einem der vorhergehenden Ansprüche, wobei das Kapillarelement (30) zumindest teilweise zwischen dem ersten Elektrodenhauptkörper (24a) und dem zweiten Elektrodenhauptkörper (26a) angeordnet ist.

6. Elektrodenanordnung (22) nach einem der vorhergehenden Ansprüche, wobei das Kapillarelement (30) aus einem Fasermaterial oder aus einem porösen Material hergestellt ist.

7. Batteriezelle (14) für ein Fahrzeug (10), wobei die Batteriezelle (14) eine Elektrodenanordnung (22) nach einem der Ansprüche 1 bis 6 und ein Batteriegehäuse (16) umfasst, wobei die Elektrodenanordnung (22) innerhalb des Batteriegehäuses (16) angeordnet ist.

8. Batteriezelle (14) nach Anspruch 7, wobei in einem Betriebszustand der Batteriezelle (14) der erste Verbindungsanschluss (24b) und/oder der zweite Verbindungsanschluss (26b) nach unten ausgerichtet sind/ist.

9. Batteriezelle (14) nach Anspruch 7 oder 8, wobei das Kapillarelement (30) eine untere Wand (16b) des Batteriegehäuses (16) kontaktiert.

10. Fahrzeug (10), das eine Batteriezelle (14) nach einem der Ansprüche 7 bis 9 umfasst, wobei in einem Betriebszustand des Fahrzeugs (10) der erste Verbindungsanschluss (24b) und/oder der zweite Verbindungsanschluss (26b) nach unten ausgerichtet sind/ist.

## Revendications

1. Ensemble électrode (22) pour une cellule de batterie (14) d'un véhicule (10), l'ensemble électrode (22) comprenant
une première électrode (24) avec un corps principal de première électrode (24a) et une première borne de raccordement (24b) faisant saillie à partir du corps principal de première électrode (24a),
une seconde électrode (26) avec un corps principal de seconde borne (26a) et une seconde borne de raccordement (26b) faisant saillie à partir du corps principal de seconde borne (26a), et
un élément capillaire (30) étant au moins partiellement agencé à l'extérieur d'un espace défini entre le corps principal de première électrode (24a) et le corps principal de seconde borne (26a),
dans lequel l'élément capillaire (30) est raccordé fluidiquement à l'espace défini entre le corps principal de première électrode (24a) et le corps principal de seconde borne (26a),
**caractérisé en ce que** l'élément capillaire (30) est orienté vers le bas dans un état de fonctionnement de l'ensemble électrode (22),
**en ce que** l'élément capillaire (30) est au moins partiellement agencé entre la première borne de raccordement (24b) et la seconde borne de raccordement (26b), et
**en ce que** l'élément capillaire (30) est en forme de languette, en forme de barre, ou en forme de bloc.

2. Ensemble électrode (22) de la revendication 1, dans lequel, dans un état de fonctionnement de l'ensemble électrode (22), au moins une de la première borne de raccordement (24b) et de la seconde borne de raccordement (26b) est orientée vers le bas.

3. Ensemble électrode (22) de l'une quelconque des revendications précédentes, comprenant en outre un séparateur (28), dans lequel l'élément capillaire (30) entre en contact avec le séparateur (28) ou dans lequel l'élément capillaire (30) est formé de façon monobloc avec le séparateur (28).

4. Ensemble électrode (22) de la revendication 3, dans lequel l'élément capillaire (30) est fait du même matériau que le séparateur (28).

5. Ensemble électrode (22) de l'une quelconque des revendications précédentes, dans lequel l'élément capillaire (30) est au moins partiellement agencé entre le corps principal de première électrode (24a) et le corps principal de seconde borne (26a).

6. Ensemble électrode (22) de l'une quelconque des revendications précédentes, dans lequel l'élément capillaire (30) est fait d'un matériau fibreux ou d'un matériau poreux.

7. Cellule de batterie (14) pour un véhicule (10), la cellule de batterie (14) comprenant un ensemble électrode (22) selon l'une quelconque des revendications 1 à 6, et un boîtier de batterie (16), dans laquelle l'ensemble électrode (22) est agencé à l'intérieur du boîtier de batterie (16).

8. Cellule de batterie (14) de la revendication 7, dans laquelle, dans un état de fonctionnement de la cellule de batterie (14), la première borne de raccordement (24b) et/ou la seconde borne de raccordement (26b) sont orientées vers le bas.

9. Cellule de batterie (14) de la revendication 7 ou 8, dans laquelle l'élément capillaire (30) entre en contact avec une paroi inférieure (16b) du boîtier de batterie (16).

10. Véhicule (10) comprenant une cellule de batterie (14) de l'une quelconque des revendications 7 à 9, dans lequel, dans un état de fonctionnement du véhicule (10), la première borne de raccordement (24b) et/ou la seconde borne de raccordement (26b) sont orientées vers le bas.
